# NOUVEAU FASCICULE DE BREVET EUROPEEN

(11) **EP 0 485 255 B2**
(45) Date de publication et mention de la décision concernant l'opposition: **28.07.1999**
(45) Mention de la délivrance du brevet: 24.11.1993
(21) Numéro de dépôt: 91402875.8
(22) Date de dépôt: 25.10.1991
(51) Int. Cl.: C10B 53/00

(54) **Procédé et dispositif de production d'un combustible solide à partir de déchets combustibles**
Verfahren und Vorrichtung zur Herstellung von einem festen Brennstoff ausgehend von brennbaren Abfällen
Process and apparatus for the production of a solid fuel from combustible wastes

(30) Priorité: 07.11.1990 FR 9013844
(43) Date de publication de la demande: 13.05.1992
(73) Titulaire: INSTITUT FRANCAIS DU PETROLE, 92502 Rueil-Malmaison (FR)
(72) Inventeur: Martin, Gérard, F-92500 Rueil Malmaison (FR)
(74) Mandataire: Lewald, Dietrich, Dipl.-Ing.

(56) Documents cités:
- EP-A- 0 040 857
- WO-A-83/00046
- WO-A-89/12086
- DE-A- 2 925 620
- DE-A- 2 950 324
- GB-A- 1 286 595
- GB-A- 1 562 492
- US-A- 3 485 014
- US-A- 4 201 751
- US-A- 4 303 477
- US-A- 4 364 796

## Description

La présente invention concerne la production de combustible solide à partir de déchets combustibles tels que, par exemple, des déchets industriels et ménagers.

Plus spécifiquement, l'invention concerne le traitement des déchets avec élimination de différents polluants par voie sèche, c'est-à-dire, sans lavage ou traitement humide.

D'une manière générale, dans l'ensemble des opérations de traitement des déchets industriels, l'étape d'élimination des polluants, lorsqu'elle existe, est réalisée par voie humide, ce qui implique des installations et des coûts de fonctionnement non négligeables.

Un exemple de dispositif pour le traitement par pyrolyse de matériaux contenant des hydrocarbures est donné dans le document US-A-4.743.341. Une opération de décontamination "sèche" a lieu pendant la pyrolyse grâce, notamment, à un lit fluidisé interposé entre la zone où brûlent les gaz et la zone supérieure d'évacuation des gaz propres.

Par ailleurs, on a déjà proposé dans le document US-A-4.303.477 d'utiliser en différents endroits d'un circuit de traitement de déchets, une poudre basique pour éliminer les métaux lourds, l'acide sulfureux ou des halogènes des gaz de combustion d'un four traitant les déchets.

La production des combustibles inodores et entreposables est connu de la WO 83/00046. La purification des gaz se fait dans un séparateur extérieur et différent du réacteur de pyrolyse.

L'invention a pour but de fournir un procédé permettant le traitement de déchets industriels et/ou ménagers avec élimination de la plupart des polluants par voie sèche, en faisant appel à des moyens aussi simples que possible, tant dans leur constitution que dans leur utilisation.

Un autre avantage de l'invention consiste en une valorisation énergétique des déchets grâce à une restitution de l'énergie, par exemple sous forme de coke, qui n'est donc pas libérée sans utilité spécifique dans l'atmosphère. Bien entendu, l'absence de composés "agressifs" ou polluants dans le combustible produit, facilite la combustion et limite les frais d'entretien des réacteurs.

Pour obtenir les avantages qui viennent d'être énoncés, le procédé selon l'invention consiste dans les étapes selon les revendications 1 ou 2.

Conformément à l'invention, les solides issus de l'opération de chauffage consistent notamment en un combustible exempt des principaux polluants contenus initialement dans les déchets. Ceci peut être obtenu en piégeant les polluants dans une unique zone.

De façon particulière, lesdits solides qui sortent du premier réacteur de pyrolyse subissent un refroidissement avant d'être stockés dans des moyens de stockage.

La zone intérieure au premier réacteur de pyrolyse est par exemple située au niveau de la sortie des gaz de pyrolyse et un deuxième réacteur participe au piégeage des gaz polluants.

Selon un autre de ses aspects, l'invention vise à fournir un dispositif selon la revendication 9.

Selon une autre caractéristique, le dispositif comporte un élément de refroidissement du combustible solide sortant dudit premier réacteur de pyrolyse.

Selon une caractéristique additionnelle de l'invention, le moyen d'extraction des polluants consiste en un deuxième réacteur vers lequel sont dirigés les gaz générés par la pyrolyse, ledit deuxième réacteur étant par ailleurs alimenté en matériau absorbant par un dispositif spécifique et comportant des moyens pour évacuer l'absorbant usé.

Le chauffage du réacteur de pyrolyse peut être assuré par des brûleurs placés à proximité du four tournant, les brûleurs étant alimentés par des gaz de pyrolyse dépollués, ou bien par des éléments caloporteurs, par exemple mélangés aux éléments absorbants, et dirigés vers le réacteur de pyrolyse.

D'autres caractéristiques et avantages de la présente invention ressortiront de la description suivante, donnée à titre indicatif mais non limitatif, en référence aux dessins annexés sur lesquels :
- la figure 1, représente un schéma général d'un mode de réalisation de l'invention,
- la figure 2 concerne un schéma d'une installation selon un autre mode de réalisation de l'invention,
- la figure 3 est un schéma simplifié d'un réacteur de pyrolyse utilisé dans le dispositif selon l'invention, et
- les figures 4 et 5 montrent, en coupe, deux dispositifs de piégeage des polluants utilisables dans l'installation selon l'invention.

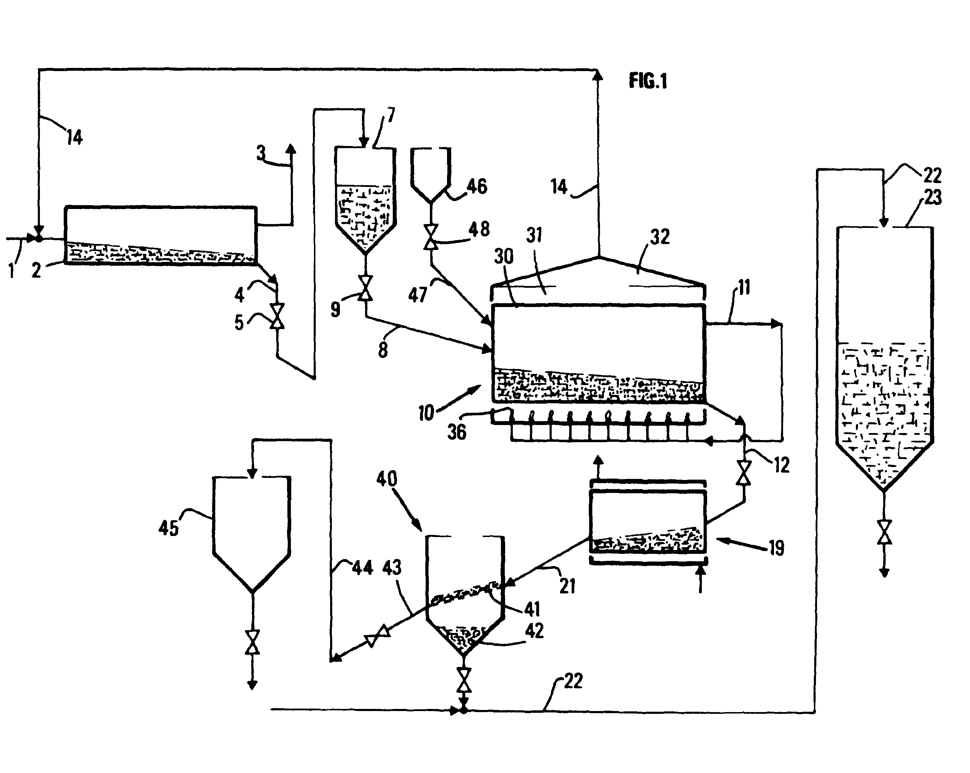

La figure 1 montre schématiquement un dispositif selon un premier mode de réalisation de l'invention qui comporte une ligne 1 d'arrivée des déchets. Les déchets peuvent être amenés dans un sécheur 2 qui peut être un four tournant. Un courant de gaz chauds amenés par une conduite 14 et issus d'un four de pyrolyse 10 (décrit ci-après) débouche juste en amont du sécheur 2, ce qui permet de mélanger dans le sécheur des gaz chauds avec les déchets.

La vapeur d'eau produite dans le sécheur 2 est éliminée par une conduite 3 tandis que les solides sont évacués par une autre conduite 4 équipée d'une vanne de contrôle 5. Les déchets passent ensuite dans une trémie 7 avant d'arriver dans le réacteur de pyrolyse 10, via une conduite 8. Une vanne de contrôle 9 sera de préférence prévue sur la conduite 8 entre la trémie 7 et le réacteurde pyrolyse 10 afin de réguler le débit des déchets alimentant celui-ci.

Le réacteur de pyrolyse 10 est de préférence un fourtournant constitué d'une enveloppe métallique interne 30 étanche et cylindrique, d'au moins un brûleur 36 placé à proximité de ladite enveloppe métallique afin de la chauffer. Le (ou les) brûleurs sont montés dans une enceinte généralement étanche 31 annulaire définie entre l'enveloppe métallique 30 et la paroi externe du réacteur 10. Le (ou les) brûleurs 36 sont alimentés en combustible par une arrivée commune 11 décrite ci-après. Un collecteur en forme de dôme 32, formé à partir de l'enceinte 31, est en outre prévu afin de canaliser les gaz chauds créés par les brûleurs 36 dans l'enceinte 31. Une conduite (ou ligne) 14 prend naissance au sommet du collecteur 32 et aboutit en amont du sécheur 2, afin de permettre à ce courant de gaz chauds de se mêler aux déchets dans le sécheur 2, comme il a déjà été dit.

Deux autres sorties transversales sont prévues dans le réacteur 10: l'une 11 débouche au centre ou en partie supérieure de l'enveloppe métallique 30 et est destinée à véhiculer les gaz de pyrolyse, l'autre 12 située en partie basse, est destinée à évacuer le solide issu de la pyrolyse, qui est ensuite refroidi dans un dispositif spécifique 19, par exemple constituée d'un cylindre refroidi par un courant d'eau. Tout dispositif réalisant cette fonction est bien entendu envisageable sans sortir du cadre de l'invention.

L'élément absorbant est injecté depuis une trémie de stockage 46 jusque dans l'enveloppe métallique 30, à proximité de l'arrivée des déchets. L'élément absorbant se présente avantageusement sous forme de particules ayant un diamètre sensiblement plus grand que celui du combustible produit par la pyrolyse.

Les particules absorbantes sont mélangées aux déchets et migrent avec eux sensiblement selon la longueurdu cylindre tournant 30, de sorte que les polluants sont piégés dans le réacteur 10, dès leur libération.

Le mélange de solides (combustible "dépollué" et absorbant) est ensuite évacué par la ligne 12, est refroidi dans le dispositif 19, puis il est véhiculé par une conduite 21 avant de passer à travers un dispositif 40 destiné à extraire l'absorbant du combustible produit.

Le dispositif 40 peut être par exemple un tamis vibrant constitué d'une grille 41 et d'une zone de stockage intermédiaire 42 dans laquelle tombe le combustible séparé qui peut ensuite être envoyé par une conduite 22 vers le silo de stockage final 23. L'absorbant est, quant à lui, évacué par une autre conduite 43 qui l'amène par exemple dans une trémie de stockage 45.

La pyrolyse des déchets s'effectue entre 200 et 1.500°C, de préférence entre 400 et 600°C.

Le temps de séjour des déchets varie, selon le débit souhaité et/ou la consistance des déchets, entre 0,5 et 100 minutes.

Pour certains types de déchets, l'étape préalable de séchage peut être supprimée. Dans ce cas, les déchets sont directement envoyés dans le réacteur de pyrolyse 10 et les fumées chaudes récupérées dans le collecteur 32 sont utilisées par exemple pour produire de la vapeur ou de l'eau chaude dans une chaudière.

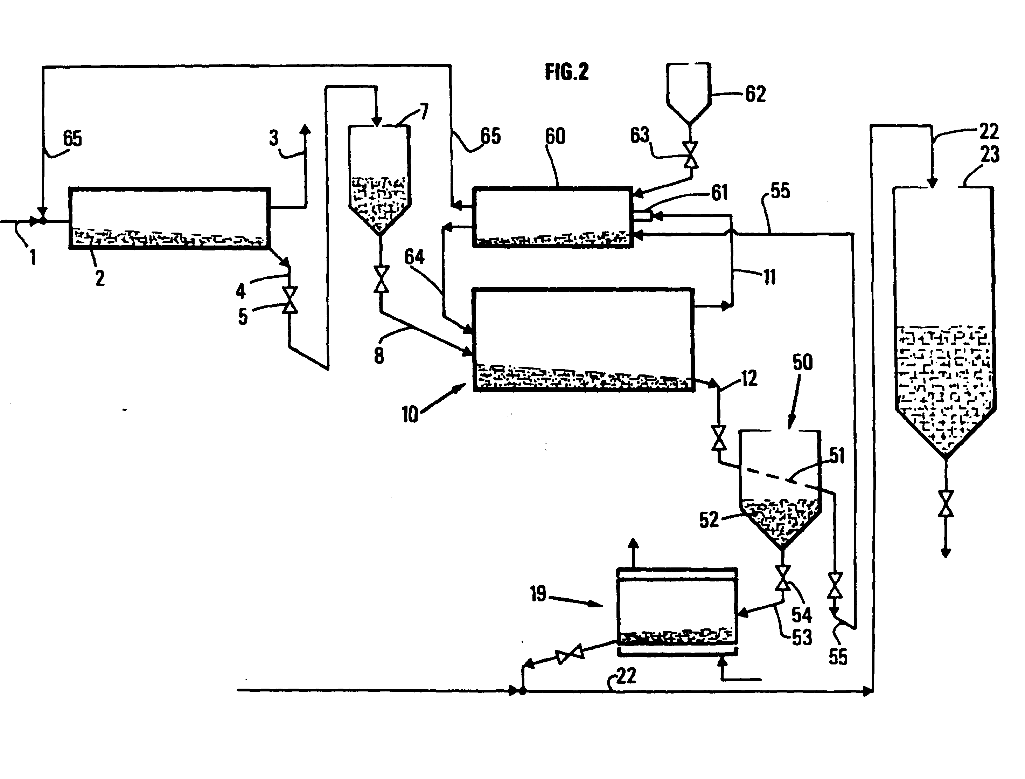

La figure 2 montre un autre mode de réalisation de l'invention quine diffère du premier que par le mode de chauffage du réacteur de pyrolyse 10. Le chauffage des éléments séjournant dans le réacteur 10 est en effet réalisé grâce à une injection de solides caloporteurs amenés par une conduite 64. Après récupération en aval du réacteur de pyrolyse 10, les solides caloporteurs sont réchauffés dans un réacteur de réchauffage 60. De préférence, le caloporteur servira de support à un absorbant. Le renouvellement du caloporteur qui, dans ce cas, joue également le rôle d'absorbant, s'effectue à partir de la trémie de stockage 62. Une vanne 63 ou tout autre élément de régulation de débit peut en outre être prévue sur la conduite (non référencée) destinée à amener le caloporteur issu de la trémie de stockage 62 vers le réacteur de réchauffage 60. Un élément chauffant tel qu'un brûleur 61 assure un réchauffage direct à proximité du caloporteur dans le deuxième réacteur 60. Cette disposition n'est toutefois pas limitative et un chauffage externe du réacteur 60 est ainsi envisageable.

Le brûleur 61 est alimenté en gaz de pyrolyse par la conduite 11 de sortie. Une conduite de fumées chaudes 65 issues du deuxième réacteur 60 peut être prévue afin d'envoyer ces gaz chauds juste en amont du sécheur 2.

Les caloporteurs qui jouent ici le rôle d'absorbant des polluants, sont donc chauffés dans le deuxième réacteur 60, puis injectés par la conduite 64 dans le réacteur de pyrolyse 10, où ils sont mélangés avec les déchets à traiter. Le coke, ou combustible solide dépollué, sort du premier réacteur de pyrolyse 10 par la conduite 12 tandis que les gaz de pyrolyse sont évacués par la conduite 11 qui alimente le brûleur 61 du deuxième réacteur 60.

Le coke et les caloporteurs sont séparés en sortie du premier réacteur de pyrolyse 10, dans un moyen approprié tel que par exemple un tamis vibrant 50 constitué d'une grille 51 et d'un cône de stockage intermédiaire 52. Le coke est ensuite dirigé par une conduite 53 vers un refroidisseur 19 tel que déjà décrit. Une vanne 54 peut être prévue sur la conduite 53. Le caloporteur est dirigé par une conduite 55 vers le deuxième réacteur 60, après avoir été débarrassé de l'absorbant usé.

Le caloporteur peut être constitué d'absorbant brut ou servir de support à l'absorbant qui fait alors l'objet d'une imprégnation régulière.

Dans le mode de réalisation de la figure 2, les fumées produites par le brûleur 61 circulent à co-courant avec les solides caloporteurs dans le réacteur 60, mais le fonctionnement du réacteur 60 à contre-courant peut également être envisagé.

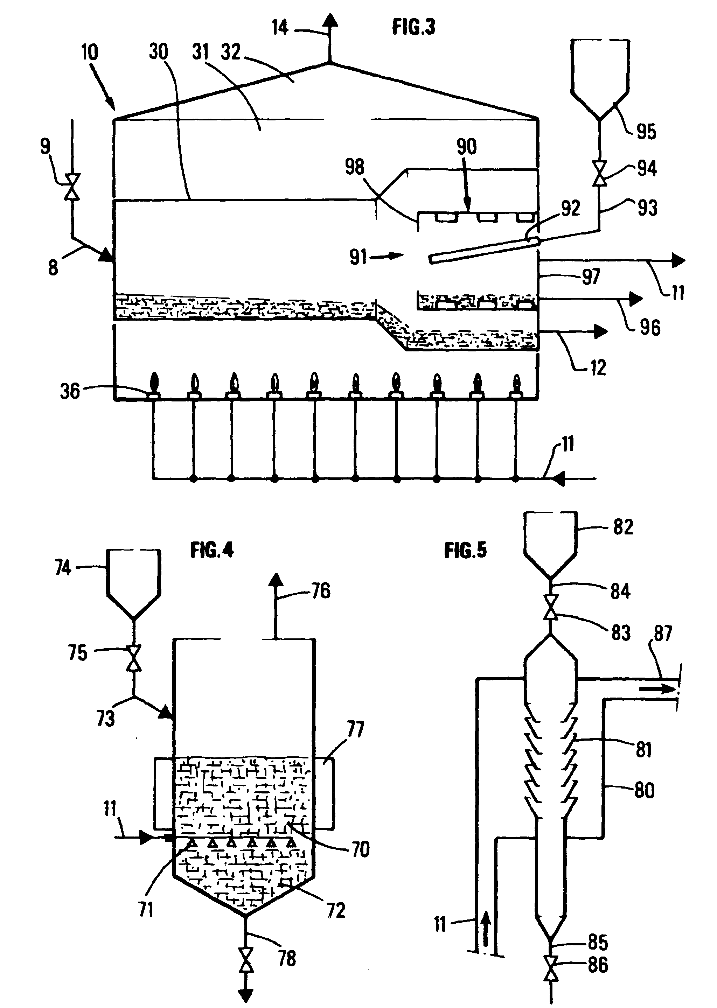

Un autre mode de réalisation de l'invention va maintenant être décrit en relation avec la figure 3 qui illustre un réacteur de pyrolyse 10 quelque peu modifié puisqu'il permet de réaliser, à l'intérieur même de l'enveloppe métallique 30, un piégeage des polluants.

Pour ce faire, le cylindre tournant 30 comporte, dans la zone d'évacuation des gaz de pyrolyse un deuxième cylindre tournant 90 de préférence coaxial et totalement contenu dans le premier cylindre tournant 30. Ce deuxième cylindre 90 communique avec le premier cylindre 30 par une ouverture 91 en son fond situé à l'intérieur du cylindre 30, ouverture 91 par laquelle passent les gaz de pyrolyse ayant déjà séjourné dans le premier cylindre tournant 30.

L'arrivée d'absorbant se situe au niveau du fond 97 opposé au fond 91, par tout système connu en soi. Un silo de stockage de l'absorbant 95 relié à une conduite 93 prolongée par une canne 92, peuvent par exemple constituer le dispositif d'alimentation en absorbant du deuxième cylindre tournant 90. D'autres dispositifs à projection peuvent aussi être envisagés. Le débit d'absorbant est de préférence contrôlé par une vanne telle que 94 placée sur la conduite d'alimentation 93. Le rebord 98 formé à l'extrémité interne du deuxième cylindre 90 est destiné à retenir l'absorbant et à éviter tout mélange avec les déchets et le combustible sortant du premier réacteur de pyrolyse. Deux sorties sont prévues dans le fond 97 du deuxième cylindre tournant 90. L'une 11 pour les gaz de pyrolyse dépollués, qui, comme dans les modes de réalisation décrits ci-avant, dirige ces gaz vers les brûleurs 36 du réacteur 10, la deuxième sortie 96 est destinée à l'absorbant usé qui peut par exemple être stocké dans une trémie ou recyclé partiellement.

Sans sortir du cadre de l'invention, le dispositif spécifique destiné à piéger les polluants peut comporter un lit mobile d'absorbant, représenté sur la figure 5, ou encore un lit fluidisé tel que montré par la figure 4.

Dans le cas de la figure 5, le piégeage des polluants s'effectue sur un lit mobile d'absorbant. Le réacteur 80 assurant la mise en contact des gaz de pyrolyse avec l'absorbant comporte deux panneaux du type store vénitien 81, entre lesquels circule l'absorbant. L'écoulement de l'absorbant s'effectue de manière gravitaire depuis le silo de stockage 82 du produit frais, en passant parla ligne d'alimentation 84, jusqu'à la ligne d'évacuation 85. Ces deux lignes sont équipées de vannes 83 et 86. Les gaz débarrassés des polluants sont envoyés vers les brûleurs du four de pyrolyse par la ligne 87.

Dans le cas de la figure 4, le traitement des gaz s'effectue dans un lit fluidisé 70. Les gaz véhiculés par la ligne 11 sont introduits à la base du lit dans des tubes de distribution 71. L'absorbant frais est issu de la trémie 74 et amené par la ligne 73 équipée de la vanne 75. L'absorbant usé est évacué par le bas du lit fluidisé 72 et par la ligne 78. Les gaz débarrassés de leurs matières polluantes sont envoyés vers les brûleurs du four de pyrolyse par la ligne 76. Lorsque l'on veut éviter la condensation de certaines matières hydrocarbonées sur l'absorbant, le lit fluidisé peut être équipé d'un dispositif de chauffage extérieur 77.

Bien entendu, l'homme de l'art sera en mesure d'imaginer, à partir du procédé et du dispositif dont la description vient d'être donnée à titre simplement illustratif et nullement limitatif, diverses variantes et modifications ne sortant pas du cadre de l'invention.

## Revendications

1. Procédé de production d'un combustible solide à partir de déchets combustibles consistant notamment à trier et broyer lesdits déchets, à les traiter par chauffage à l'abri de l'oxygène dans un premier réacteur de pyrolyse (10) et à recueillir les déchets ainsi traités, tout ou partie des gaz issus de ladite opération de chauffage étant débarrassés à chaud de leurs éléments polluants avant d'être réutilisés pour le chauffage dudit premier réacteur de pyrolyse (10), les polluants étant piégés dans une unique zone spécifique du réacteur de pyrolyse (10) grâce à un absorbant, caractérisé en ce que, afin de produire des combustibles solides exempts des principaux polluants contenus initialement dans les déchets, l'élément absorbant se présente avantageusement sous forme de particules ayant 1 diamètre sensiblement plus grand que celui du combustible produit par la pyrolyse de sorte que l'absorbant usé et les combustibles solides dépollués sont évacués séparément.

2. Procédé de production d'un combustible solide à partir de déchets combustibles consistant notamment à trier et broyer lesdits déchets, à les traiter par chauffage à l'abri de l'oxygène dans un premier réacteur de pyrolyse (10) et à recueillir les déchets ainsi traités, tout ou partie des gas issus de ladite opération de chauffage étant débarrassés à chaud de leurs éléments polluants avant d'être réutilisés pour le chauffage dudit premier réacteur de pyrolyse (10), les polluants étant piégés par un absorbant dans une zone unique spécifique du réacteur (10), caractérisé en ce que, afin de produire des combustibles solides exempts des principaux polluants contenus initialement dans les déchets, ladite zone de piégeage des polluants est située au niveau de la sortie des gaz de pyrolyse et un second réacteur (90) est placé dans cette zone afin d'y réaliser le piégeage des gaz polluants, l'absorbant usé et les combustibles dépollués étant évacués séparément.

3. Procédé de production d'un combustible solide à partir de déchets combustibles selon l'une des revendications 1 ou 2 caractérisé en ce que lesdits solides qui sortent du premier réacteur de pyrolyse (10) subissent un refroidissement avant d'être stockés dans des moyens de stockage (23).

4. Procédé de production d'un combustible solide selon l'une quelconque des revendications 2 ou 3, caractérisé en ce que ledit second réacteur (90) est alimenté par un absorbant situé à l'extrémité du premier et du second réacteur, et autorise les sorties séparées (11, 96) des gaz de pyrolyse débarrassés de leurs principaux polluants (11) et dudit absorbant usé (96).

5. Procédé selon l'une quelconque des revendications précédentes, caractérisé en ce qu'il consiste en outre en une étape de séchage des déchets avant ladite opération de chauffage à l'abri de l'oxygène.

6. Procédé selon l'une quelconque des revendications 1, 3 ou 5, caractérisé en ce que l'extraction des gaz polluants est réalisée par des absorbants qui sont chauffés dans un moyen (60) extérieur audit premier réacteur de pyrolyse (10).

7. Procédé selon l'une quelconque des revendications 1 à 5, caractérisé en ce qu'une partie des fumées de combustion sortant du premier réacteur de pyrolyse (10) est réutilisée pour le séchage préalable des déchets.

8. Procédé selon l'une quelconque des revendications précédentes, caractérisé en ce que les polluants sont constitués essentiellement de chlore, fluor, soufre, de leurs acides associés et de métaux lourds.

9. Dispositif de pyrolyse destiné à la production d'un combustible solide à partir de déchets combustibles, comportant au moins un réacteur de pyrolyse (10), des moyens (6 ; 8) destinés à amener les déchets ayant déjà subi au moins un broyage, un tri et/ou un séchage vers ledit réacteur de pyrolyse (10), des moyens recevant l'élément absorbant (90) destinés à extraire à chaud les polluants contenus dans les gaz de pyrolyse et situés dans une unique zone spécifique (10 ; 90) du réacteur, et des moyens (16 ; 64) permettant de diriger les gaz de pyrolyse ainsi dépollués vers ledit premier réacteur (10) à des fins de chauffage, caractérisé en ce qu'il comporte en outre des moyens pour introduire l'élément absorbant se présentant avantageusement sous forme de particules ayant 1 diamètre sensiblement plus grand que celui du combustible produit par la pyrolyse et des moyens (40) destinés à séparer l'absorbant usé et le combustible solide dépollué.

10. Dispositif selon la revendication 9, caractérisé en ce qu'il comporte en outre un dispositif de refroidissement (19) du combustible solide sortant dudit premier réacteur de pyrolyse (10).

11. Dispositif selon l'une des revendications 9 ou 10, caractérisé en ce que le moyen d'extraction des polluants consiste en un deuxième réacteur (90) vers lequel sont dirigés les gaz générés par la pyrolyse (10), ledit deuxième réacteur étant par ailleurs alimenté en matériau absorbant par un dispositif spécifique (95) comportant des moyens pour évacuer l'absorbant usé.

12. Dispositif selon l'une quelconque des revendications 9 à 11, caractérisé en ce que des brûleurs (36) sont prévus pour chauffer le premier réacteur de pyrolyse (10).

## Patentansprüche

1. Verfahren zur Herstellung eines festen Brennstoffs ausgehend von brennbaren Abfällen, wobei das Verfahren insbesondere darin besteht, diese Abfälle zu klassieren und zu vermahlen, sie durch Erwärmen geschützt gegen Sauerstoff in einem ersten Pyrolysereaktor (10) zu behandeln und die so gesammelten Abfälle zu sammeln, wobei aus diesem Heizvorgang stammende Gase warm ganz oder zum Teil von ihren Verunreigigungselementen befreit werden, bevor sie zur Erwärmung dieses ersten Pyrolysereaktors (10) wiederverwendet werden, und die Verunreinigungen in einer einzigen spezifischen Zone des Pyrolysereaktors (10) dank eines Absorptionsmittels eingefangen werden, dadurch gekennzeichnet, daß zur Erzeugung fester Brennstoffe, die frei von den hauptsächlichen ursprünglich in den Abfällen enthaltenen Verunreinigungen sind, das absorbierende Element vorzugsweise in Form von Partikeln sich darstellt, die einen Durchmesser haben, der im wesentlichen größer als der des durch die Pyrolyse erzeugten Brennstoffs ist, derart, daß das verbrauchte Absorptionsmittel und die festen von Verunreinigungen befreiten Brennstoffe getrennt abgezogen werden.

2. Verfahren zur Erzeugung eines festen Brennstoffs ausgehend von brennbaren Abfällen, wobei das Verfahren insbesondere darin besteht, diese Abfälle zu klassieren und zu vermahlen, sie durch Erwärmen, geschützt gegen Sauerstoff in einem ersten Pyrolysereaktor (10) zu behandeln und die so behandelten Abfälle zu sammeln, wobei die aus diesem Heizvorgang stammenden Gase insgesamt oder ein Teil davon, warm von ihren Verunreinigungselementen befreit werden, bevor sie zur Erwärmung dieses ersten Pyrolysereaktors (10) wiederverwendet werden, und die Verunreinigungen durch ein Absorptionsmittel in einer einzigen spezifischen Zone des Reaktors (10) eingefangen werden, dadurch gekennzeichnet, daß, um feste Brennstoffe, frei von ursprünglich in den Abfällen enthaltenen Hauptverunreinigungen zu erzeugen, diese Einfangzone für die Verunreinigungen in Höhe des Austritts der Pyrolysegase angebracht ist und ein zweiter Reaktor (90) in dieser Zone angeordnet ist, um hierin den Einfang der Verunreinigungsgase zu realisieren, wobei das verbrauchte Absorptionsmittel und die von Verunreinigungen befreiten Brennstoffe getrennt abgezogen werden.

3. Verfahren zur Erzeugung eines festen Brennstoffes aus brennbaren Abfällen nach einem der Ansprüche 1 oder 2, dadurch gekennzeichnet, daß diese Feststoffe, die aus dem ersten Pyrolysereaktor (10) austreten, eine Abkühlung erfahren, bevor sie in Speichermitteln (23) gespeichert werden.

4. Verfahren zur Erzeugung eines festen Brennstoffes nach einem der Ansprüche 2 oder 3, dadurch gekennzeichnet, daß dieser zweite Reaktor (90) mit einem Absorptionsmittel gespeist wird, das sich am Ende des ersten und des zweiten Reaktors befindet und die getrennten Austritte (11, 96) der von ihren Hauptverunreinigungen (11) und diesem verbrauchten Absorptionsmittel (96) befreiten Pyrolysegase zuläßt.

5. Verfahren nach einem der vorhergehenden Ansprüche, dadurch gekennzeichnet, daß es im übrigen aus einer Trocknungsstufe der Abfälle vor diesem gegen Sauerstoff geschützten Heizvorgang besteht.

6. Verfahren nach einem der Ansprüche 1, 3 oder 5, dadurch gekennzeichnet, daß die Extraktion der verunreinigenden Gase durch Absorptionsmittel herbeigeführt wird, die in einem Mittel (60) außerhalb dieses ersten Pyrolysereaktors (10) erwärmt werden.

7. Verfahren nach einem der Ansprüche 1 bis 5, dadurch gekennzeichnet, daß ein Teil der aus dem ersten Pyrolysereaktor (10) austretenden Verbrennungsrauchgase zum vorheriger Trocknen der Abfälle widerverwendet wird.

8. Verfahren nach einem der vorhergehenden Ansprüche, dadurch gekennzeichnet, daß die Verunreinigungen im wesentlichen aus Chlor, Fluor, Schwefel und deren zugeordneten Säuren sowie Schwermetallen bestehen.

9. Pyrolysevorrichtung, die für die Erzeugung eines festen Brennstoffes ausgehend von brennbaren Abfällen bestimmt ist, umfassend: wenigstens einen Pyrolysereaktor (10), Mittel (6; 8), die dazu bestimmt sind, die Abfälle, die schon wenigstens ein Vermahlen, eine Klassierung und/oder eine Trocknung erfahren haben, zu diesen Pyrolysereaktor (10) zu führen, Mittel (90), die ein absorbierendes Element aufnehmen und dazu bestimmt sind, heiß die in den Pyrolysegase enthaltenden Verunreinigungen zu extrahieren und die in einer einzigen spezifischen Zone (10; 90) des Reaktors angeordnet sind, sowie Mittel (16; 64), die es ermöglichen, die so von Verunreinigungen befreiten Pyrolysegase zu diesem ersten Reaktor (10), um sie zu erwärmen, zu leiten, dadurch gekennzeichnet, daß sie im übrigen Mittel (40) zum Einführen des absorbierenden Elementes, das vorzugsweise in Form von Partikeln vorliegt, die einen Durchmesser, der im wesentlichen größer als der des durch die Pyrolyse erzeugten Brennstoffes ist, haben, und Mittel (40) aufweist, die dazu bestimmt sind, das verbrauchte Absorptionsmittel und den von Verunreinigungen befreiten festen Brennstoff abzutrennen.

10. Vorrichtung nach Anspruch 9, dadurch gekennzeichnet, daß sie im übrigen eine Kühlvorrichtung (19) für den festen Brennstoff, der aus diesem ersten Pyrolysereaktor (10) austritt, aufweist.

11. Vorrichtung nach einem der Ansprüche 9 oder 10, dadurch gekennzeichnet, daß das Mittel zur Extraktion der Verunreinigung aus einem zweiten Reaktor (90) besteht, gegen den die durch die Pyrolyse (10) erzeugten Gase geleitet werden, wobei dieser zweite Reaktor im übrigen mit einem absorbierendem Material durch eine spezifische Vorrichtung (95) gespeist ist, welche Mittel zum Abziehen des verbrauchten Absorptionsmittels aufweist.

12. Vorrichtung nach einem der Ansprüche 9 bis 11, dadurch gekennzeichnet, daß Brenner (36) vorgesehen sind, um den ersten Pyrolysereaktor (10) zu erwärmen.

## Claims

1. Process for producing a solid fuel from fuel waste, consisting especially in sorting and crushing said waste, in treating it by heating it, protected from oxygen, in a first pyrolysis reactor (10), and in collecting the waste thus treated, all or part of the gases given off during said heating operation being freed of their polluting elements while still hot before being re-used for heating said first pyrolysis reactor (10), and in trapping said pollutants within a single specific zone of the pyrolysis reactor (10) owing to an absorbent, characterized in that, in order to produce solid fuels free from the main pollutants initially contained in the waste, the absorbing element is preferably formed in the form of particles having substantially a diameter larger than that of the fuel produced by the pyrolysis such that the used absorbent and the de-polluted solid fuels are evacuated seperately.

2. Process for producing a solid fuel from fuel waste, consisting especially in sorting and crushing said waste, in treating it by heating it, protected from oxygen, in a first pyrolysis reactor (10), and in collecting the waste thus treated, all or part of the gases given off during said heating operation being freed of their polluting elements while still hot before being re-used for heating said first pyrolysis reactor (10), and in trapping said pollutants within a single specific zone of the pyrolysis reactor (10) owing to an absorbent, characterized in that, in order to produce solid fuels free from the main pollutants initially contained in the waste, the trapping zone for the pollutants is located at the hight of the outlet of the gases of pyrolysis and a second reactor (90) is placed in this zone in order to trap the polluting gases, wherein the used absorbent and the de-polluted solid fuels are evacuated seperately.

3. Process for producing a solid fuel according to claim 1 or 2, characterized in that said solids which come out of the first pyrolysis reactor (10) are cooled before being stored in the storing means (23).

4. Process for producing a solid fuel according to claim 2 or 3, characterized in that said second reactor (90) is fed by an absorbent located at the extremity of the first and second reactors and allows the gases of pyrolysis, freed of their main pullutants and the used absorbent, to escape via separate outlets (11, 96).

5. Process according to any one of the preceding claims, characterized in that it consists in addition of a stage in which the waste is dried before said heating operation protected from oxygen.

6. Process according to any one of claims 1, 3 or 5, characterized in that extraction of the polluting gases is effected by the absorbent heated in a means (60) outside said first pyrolysis reactor (10).

7. Process according to any one of claims 1 to 5, characterized in that part of the fumes from combustion escaping from the first pyrolysis reactor (10) are re-ued for drying the waste beforehand.

8. Process according to any one of the preceding claims, characterized in that the pollutants are composed essentially of chlorine, fluorine, sulphur, their associated acids, and heavy metals.

9. Pyrolysis device intended for the production of a solid fuel from fuel waste, comprising at least one pyrolysis reactor (10), means (6; 8) for supplying waste that has already been crushed at least once, sorting and/or drying towards said pyrolysis reactor (10), means (90) containing an absorbing element for extracting the pollutants contained in the gases of pyrolysis while these gases are still hot and being arranged within a single specific zone (10; 90) of the reactor, and means (16; 64) that allow the gases of pyrolysis thus de-polluted to be conveyed to said first reactor (10) for heating purposes, characterized in that it also comprises means (40) for feeding the absorbing element preferably having the form of particles provided substantially with a diameter larger than that of the fuel produced by the pyrolysis, and means (49) for evacuating separately the used absorbent and the de-polluted solid fuel.

10. Device accroding to claim 9, characterized in that it also comprises a device (19) for cooling the solid fuel that comes out of said first pyrolysis reactor (10).

11. Device according to one of claims 9 or 10, characterized in that the means of extracting the pollutants consists of a second reactor (90) to which the gases produced by the pyrolysis (10) are conveyed, said second reactor being, moreover, fed with absorbent material by a specific device (95) comprising means (18) for evacuating the used absorbent.

12. Device according to any one of claims 9 to 11, characterized in that burners (36) are provided to heat the first pyrolysis reactor (10).
